# EUROPEAN PATENT SPECIFICATION

(11) **EP 0 580 804 B1**
(45) Date of publication and mention of the grant of the patent: **13.05.1998**
(21) Application number: 92917368.0
(22) Date of filing: 13.04.1992
(51) Int. Cl.: B05B 15/04, B05D 1/32

(54) **MASKING METHODS USING A FOAM WEB**
VERFAHREN ZUM ABDECKEN UNTER VERWENDUNG VON SCHAUMBAENDERN
PROCEDES DE MASQUAGE UTILISANT UNE BANDE EN MOUSSE

(30) Priority: 19.04.1991 GB 9108385
(43) Date of publication of application: 02.02.1994
(73) Proprietor: MINNESOTA MINING AND MANUFACTURING COMPANY, St. Paul, Minnesota 55133-3427 (US)
(72) Inventor: BASTOW, David, R., Tamsworth Staffordshire B77 2DU (GB)
(74) Representative: Bowman, Paul Alan
(86) International application number: US9202030
(87) International publication number: WO9218252

(56) References cited:
- EP-A- 0 384 626
- WO-A-90/15668
- BE-A- 1 001 535
- DE-A- 3 312 201

## Description

The present invention relates to the masking of an exposed area of a surface from an adjacent area to facilitate treatment of the exposed area by for example paint spraying. The invention has particular, but not exclusive application in the motor industry where selective repairs must be effected on painted surfaces. The invention also relates to a masking element for use in such methods.

Various masking techniques are known for isolating areas from adjacent areas on a surface. Such isolation is needed in a number of situations where treatment of one form or another is to be applied exclusively to a specific area or region. Masking techniques are particularly useful when the treatment involves the application of a fluid medium. Examples are chemical treatments, painting and decorating. Typically, the treatment areas are isolated from their surroundings by a masking tape which defines the boundary thereof.

DE-A-3312201 discloses extremely stretchable adhesive tape, which is kept at a distance of the surface to be painted by a bottom layer that is located further back and consists of particles of foam material, styrene pellets, or corrugated paper and, thereby, makes possible a gradual transition of the paint layer to the surrounding surface during the spray painting. The adhesive tape may be prefabricated in a ring shape for small paint repairs whose hole can be adapted to the dimension of the location to be repaired, because of the stretchability of the adhesive tape.

The present invention is directed at masking elements which can be manufactured and sold as a complete unit ready for immediate use. According to the invention there is provided a plurality of substantially concentric masking elements formed in a common sheet of foam, wherein each element is formed into a closed curve defining upper and lower surfaces with a layer of adhesive on at least the lower surface for mounting the element on a substrate, and wherein radially adjacent elements are attached to each other along respective peripheries thereof.

Such a plurality of elements which are arranged concentrically, can be stamped from such a sheet simultaneously. Further, such a plurality of elements can be marketed in this form, with elements being available for removal from the sheet as they are required.

The plurality of masking elements according to the invention are formed from a foam material, and can conveniently be stamped from a sheet of foam which already has a layer of adhesive on at least one face thereof. The inner and outer peripheries of each element can be defined by pressure welded seams formed during the stamping, and radially adjacent elements can be attached to each other along their respective peripheries, and by such pressure welded seams, which may be readily tearable.

The invention will now be described by way of example and with reference to the accompanying schematic drawings wherein:
Figure 1 is a plan view of a circular masking element according to the invention;
Figure 2 is a section taken on line A-A of Figure 1;
Figure 3 is a plan view of a sheet of material in which a plurality of masking elements of the invention have been stamped out;
Figure 4 is a perspective view of a part of a car hood; and
Figure 5 is cross-section taken on line V-V of Figure 4.

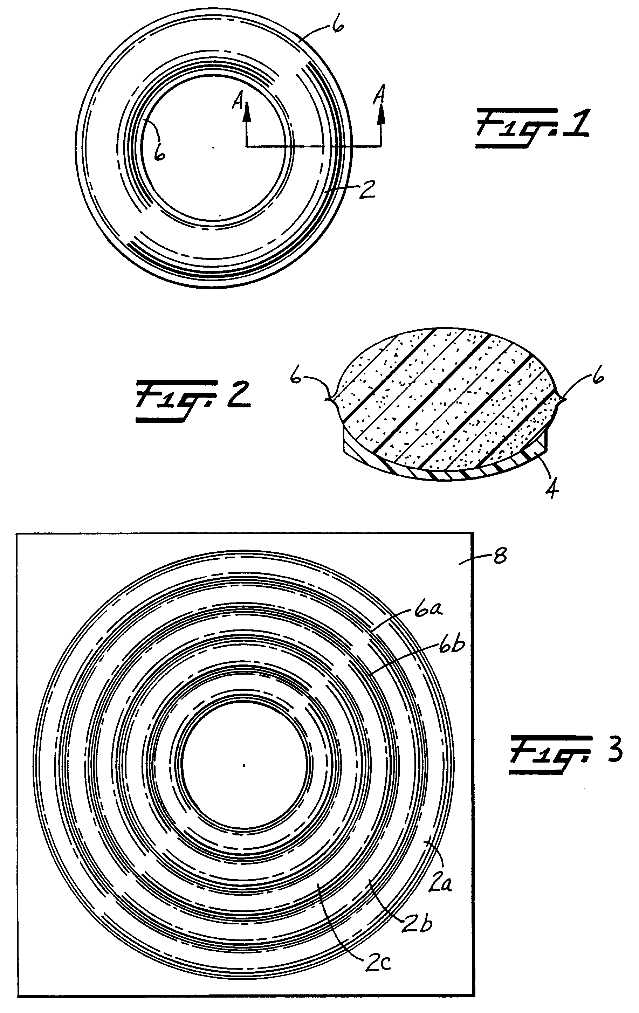

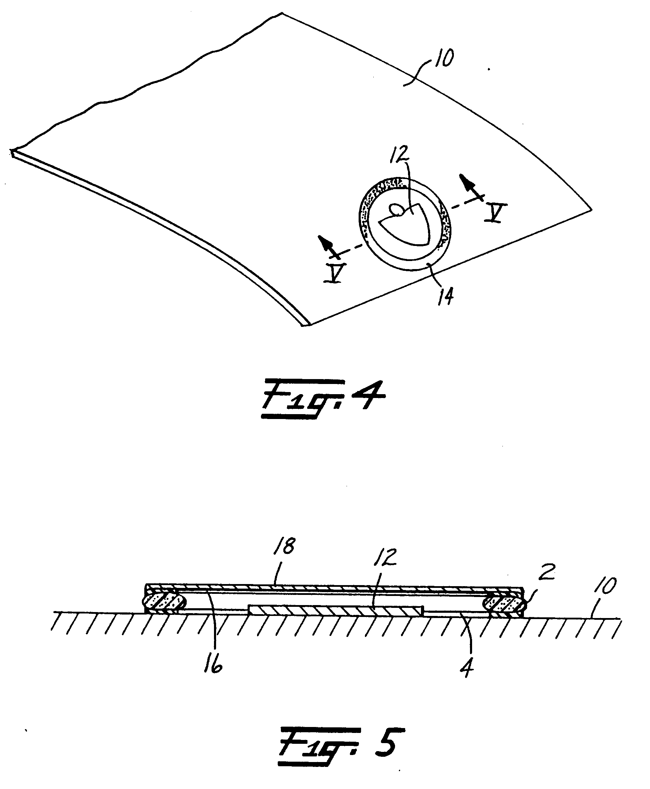

As shown in Figures 1 and 2, a masking element according to the invention takes the form of an endless length 2 of foam web having a generally elliptical cross-section. On the lower surface of the web 2 is applied an adhesive coating 4, which as can be seen from Figure 2, extends around substantially half the peripheral surface of the web 2. A typical height of the section shown in Figure 2 is 15mm, and a typical breadth is 20mm. These are preferred minimum values for webs made from polyether foam which is particularly suitable, but other plastics foams can also be satisfactory. Similarly, a typical minimum outside diameter for a masking element of the kind shown in Figure 1 is 95mm, which enables the element to isolate an area of around 70cm².

The foam web forming the mask element shown in Figures 1 and 2 is as noted above, preferably a plastics foam. Typically, it can be a foam made in accordance with our published European Patent Specification No. 0384626, with pressure welded seams 6 defining either lateral side of the web section. Forming the element in this way makes it particularly suitable for batch production, in which a plurality of elements can be simultaneously stamped out of a sheet of foam material, broadly as illustrated in Figure 3.

In Figure 3 five concentric elements are shown formed in a sheet 8 of foam material. The webs 2a, 2b and 2c of radially adjacent elements are separated from one another by pressure welded seams 6a and 6b. The seams are tearable, but as shown the sheet 8 remains intact under normal handling conditions. When one of the elements is required, its respective seams are torn to separate it from the remainder of the sheet.

The sheet 8 shown in Figure 3 may have a layer 4 of adhesive (not shown) coated thereon prior to it being stamped to identify the respective masking elements. After stamping, and as shown in Figure 2. The material contracts around the body of each web 2 resulting in the adhesive coating 4 extending around either side of the web. It will be appreciated that an adhesive coating of this form may be applied to both surfaces of the foam 8, to result in a web likewise having two adhesive coatings. The adhesive coatings need not be of the same aggressive strength. Reference is directed to our co-pending Application filed today in respect of an invention relating to the use of strips similar to the web 2 described herein with two adhesive coatings. Release liners can also be applied to the sheet 8 to facilitate handling not only of the sheet, but also of the masking elements formed therein. If desired, the release liners can be cut into separate rings, or perforated to permit easy separation.

Figures 4 and 5 illustrate the use of a masking element according to the invention. Figure 4 shows the front section of a car hood 10, most of which is to be re-painted. An emblem 12 is mounted on the hood 10, and as the paintwork around the emblem 12 does not require re-painting, this area of the hood is to be isolated from the remainder. To achieve this, an endless element 14 according to the invention is mounted on the hood 10 to surround the emblem 12. This is shown more clearly in Figure 5.

As shown in Figure 5, the web 2 of the element 14 is secured to the hood 10 by the adhesive layer 4. In this embodiment, an adhesive coating 16 is also formed on the opposite surface of the web 2, and a sheet 18 of paper or other suitable material is laid thereover and attached to the web 2 by the adhesive 16 to protect the emblem and its immediate surroundings. Alternatively of course, an adhesive coating can be separately applied to the web 2 or the sheet 18 could be formed with an adhesive coating of its own suitable for securing the sheet to the uncoated exposed surface of the web 2.

The sheet 18 can be cut to size before or after attachment to the element 14. In some embodiments of the invention, the element 14 can be provided with a masking sheet already attached. Generally though, elements according to the invention will be provided without such sheets. This will permit the element to be used to mask an enclosed area as illustrated in Figures 4 and 5, or to surround such an enclosed area while leaving it exposed for treatment. In the latter application, any sheet of material applied will extend outwards from the element rather than inwards.

Elements according to the invention have particular benefit in effecting paint repairs. The use of a foam web facilitates the achievement of a soft edge between painted and unpainted areas. However, the elements are also useful in applying other surface treatments such as coating, plating and phosphorizing.

## Claims

1. A plurality of substantially concentric masking elements (2a, 2b, 2c) formed in a common sheet of foam (8), wherein each element (2a, 2b, 2c) is formed into a closed curve defining upper and lower surfaces with a layer of adhesive (4) on at least the lower surface for mounting the element on a substrate, and wherein radially adjacent elements are attached to each other along respective peripheries (ba, bb) thereof.

2. A plurality of masking elements according to Claim 1 wherein the closed curve is a circle.

3. A plurality of masking elements according to Claim 1 wherein the closed curve is a polygon.

4. A plurality of masking elements according to any preceding Claim wherein said upper and lower surfaces are curved.

5. A plurality of masking elements according to Claim 4 wherein the foam web of each element has an elliptical cross-section.

6. A plurality of masking elements according to Claim 5 wherein the inner and outer peripheries of each element are defined by pressure welded seams (6) formed during stamping out of the sheet of foam.

7. A plurality according to Claim 6 wherein adjacent elements are attached by tearable pressure welded seams.

## Patentansprüche

1. Eine Mehrzahl im wesentlichen konzentrischer Maskierungselemente (2a, 2b, 2c), die in einer üblichen Schaumfolie (8) gebildet werden, worin jedes Element (2a, 2b, 2c) in einer geschlossenen Kurve gebildet wird, die eine obere und eine untere Oberfläche definiert, wobei eine Klebstoffschicht (4) auf wenigstens der unteren Oberfläche vorliegt, um das Element auf einem Substrat anzuordnen, und worin radiale, benachbarte Elemente entlang entsprechender Umfänge (ba, bb) derselben miteinander verbunden sind.

2. Eine Mehrzahl von Maskierungselementen gemaß Anspruch 1, worin die geschlossene Kurve ein Kreis ist.

3. Eine Mehrzahl von Maskierungselementen gemäß Anspruch 1, worin die geschlossene Kurve ein Polygon ist.

4. Eine Mehrzahl von Maskierungselementen gemäß irgendeinem der vorhergehenden Ansprüche, worin die obere und die untere Oberfläche gekrümmt sind.

5. Eine Mehrzahl von Maskierungselementen gemäß Anspruch 4, worin die Schaumbahn jedes Elements einen elliptischen Querschnitt hat.

6. Eine Mehrzahl von Maskierungselementen gemäß Anspruch 5, worin der innere und der äußere Umfang jedes Elements durch druckgeschweißte Säume (6) definiert sind, die während des Ausstanzens der Schaumfolie gebildet werden.

7. Eine Mehrzahl gemäß Anspruch 6, worin benachbarte Elemente durch abziehbare, druckgeschweißte Säume verbunden sind.

## Revendications

1. Pluralité d'éléments de masquage sensiblement concentriques (2a, 2b, 2c) formés dans une même feuille en mousse (8), dans laquelle chaque élément (2a, 2b, 2c) est formé selon une courbe fermée définissant des surfaces supérieure et inférieure avec une couche d'adhésif (4) sur au moins la surface inférieure afin de monter l'élément sur un substrat, et dans laquelle des élément radialement adjacents sont liés l'un à l'autre le long de leur périphérie (ba, bb) respective.

2. Pluralité d'éléments de masquage selon la revendication 1, dans laquelle la courbe fermée est un cercle.

3. Pluralité d'éléments de masquage selon la revendication 1, dans laquelle la courbe fermée est un polygone.

4. Pluralité d'éléments de masquage selon l'une quelconque des revendications précédentes, dans laquelle lesdites surfaces supérieure et inférieure sont incurvées.

5. Pluralité d'éléments de masquage selon la revendication 4, dans laquelle la bande en mousse de chaque élément a une section transversale elliptique.

6. Pluralité d'éléments de masquage selon la revendication 5, dans laquelle les périphéries intérieure et extérieure de chaque élément sont définies par des cordons de soudure par pression (6) formés pendant l'estampage de la feuille de mousse.

7. Pluralité d'éléments de masquage selon la revendication 6, dans laquelle des éléments adjacents sont liés par des cordons de soudure par pression détachables.
